# EUROPEAN PATENT APPLICATION

(11) **EP 4 827 200 A1**
(43) Date of publication of application: **21.10.2026**
(21) Application number: 23961085.0
(22) Date of filing: 12.12.2023
(51) Int. Cl.: H04W 72/0453, H04W 4/80

(54) **COMMUNICATION METHOD, TERMINAL, NODE DEVICE, SYSTEM, AND STORAGE MEDIUM**

(71) Applicant: Beijing Xiaomi Mobile Software Co., Ltd., Beijing 100085 (CN)
(72) Inventor: FU, Ting, Beijing 100085 (CN); ZHU, Yajun, Beijing 100085 (CN); ZHANG, Juan, Beijing 100085 (CN)
(74) Representative: Dehns Germany Partnerschaft mbB
(86) International application number: PCT/CN2023/138252
(87) International publication number: WO 2025/123220

(57) **Abstract**

The present disclosure relates to a communication method, a terminal, a node device, a system, and a storage medium. The method comprises: an Ambient Internet of Things (Ambient-IoT) terminal communicates with a node device on the basis of corresponding frequency domain information. In the method of the present disclosure, Ambient-IoT terminals perform communication on the basis of respective corresponding frequency domain information, so that different Ambient-IoT terminals can use corresponding frequency domain resources to perform communication, thereby reducing interference between communication processes of different Ambient-IoT terminals.

## Description

### TECHNICAL FIELD

The present disclosure relates to the field of communication technology, and in particular to a communication method, a terminal, a node device, a system, and a storage medium.

### BACKGROUND

The ambient internet of things (Ambient-IoT) is a type of IoT. Compared to terminals based on cellular narrow band internet of things (NB-IoT), Ambient-IoT terminals have lower complexity and cost, as well as lower maintenance cost. The characteristic of the Ambient-IoT terminal is that it does not have a battery and is activated and powered by the received electromagnetic signal; alternatively, the Ambient-IoT terminal has a battery with limited electrical storage function, but the battery does not require manual charging. Instead, the battery can obtain energy from external sources, for example, the battery can obtain a small amount of battery energy by acquiring external electromagnetic waves, thermal energy, kinetic energy, and so on. Therefore, the Ambient-IoT terminals may also be referred to as passive terminals.

### SUMMARY

The Ambient-IoT system needs to support high-density connections, and solve interference problems between Ambient-IoT terminals in the Ambient-IoT system.

Embodiments of the present disclosure provide a communication method, a terminal, a node device, a system, and a storage medium.

In a first aspect, the embodiments of the present disclosure provide a communication method. The method includes:
performing, by an Ambient-IoT terminal based on corresponding frequency domain information, communication with a node device.

In a second aspect, the embodiments of the present disclosure provide a communication method. The method includes:
performing, by a node device based on frequency domain information corresponding to an Ambient-IoT terminal, communication with the Ambient-IoT terminal.

In a third aspect, the embodiments of the present disclosure provide an Ambient-IoT terminal. The Ambient-IoT terminal includes:
a transceiving module, configured to perform, based on corresponding frequency domain information, communication with a node device.

In a fourth aspect, the embodiments of the present disclosure provide a node device. The node device includes:
a transceiving module, configured to perform, based on frequency domain information corresponding to an Ambient-IoT terminal, communication with the Ambient-IoT terminal.

In a fifth aspect, the embodiments of the present disclosure provide an Ambient-IoT terminal. The Ambient-IoT terminal includes:
one or more processors;
where the terminal is configured to perform the method in the first aspect.

In a sixth aspect, the embodiments of the present disclosure provide a node device. The node device includes:
one or more processors;
where the device is configured to perform the method in the second aspect.

In a seventh aspect, the embodiments of the present disclosure provide a communication system. The communication system includes an Ambient-IoT terminal and a node device;
where the Ambient-IoT terminal is configured to implement the method in the first aspect; and
the node device is configured to implement the method in the second aspect.

In an eighth aspect, the embodiments of the present disclosure provide a storage medium. The storage medium stores an instruction;
where the instruction, when run on a communication device, causes the communication device to perform the method in the first aspect or the second aspect.

In the methods of the present disclosure, the Ambient-IoT terminals can perform communication based on their respective corresponding frequency domain information. In this way, different Ambient-IoT terminals can use the corresponding frequency domain resources for communication, which reduces interference between communication procedures of different Ambient-IoT terminals.

### BRIEF DESCRIPTION OF THE DRAWINGS

To more clearly illustrate the technical solutions in the embodiments of the present disclosure, the following provides an introduction to the drawings required for the description of the embodiments. The following drawings are merely some embodiments of the present disclosure, and do not impose specific limitations on the scope of protection of the present disclosure.
FIG. 1 is an exemplary schematic diagram of an architecture of a communication system provided according to an embodiment of the present disclosure.
FIG. 2a is an exemplary schematic diagram of interaction of a method provided according to an embodiment of the present disclosure.
FIG. 2b is a schematic diagram of a frequency domain provided according to an embodiment of the present disclosure.
Each of FIG. 3a to FIG. 3d is an exemplary flowchart of a method provided according to an embodiment of the present disclosure.
Each of FIG. 4a to FIG. 4d is an exemplary flowchart of a method provided according to an embodiment of the present disclosure.
FIG. 5a is a schematic diagram of a structure of a terminal illustrated according to an embodiment of the present disclosure.
FIG. 5b is a schematic diagram of a structure of a node device illustrated according to an embodiment of the present disclosure.
FIG. 6a is a schematic diagram of a communication device illustrated according to an embodiment of the present disclosure.
FIG. 6b is a schematic diagram of a communication device illustrated according to an embodiment of the present disclosure.

### DETAILED DESCRIPTION

The embodiments of the present disclosure provide a communication method, a terminal, a node device, a system, and a storage medium.

In a first aspect, the embodiments of the present disclosure provide a communication method. The method includes:
performing, by an Ambient-IoT terminal based on corresponding frequency domain information, communication with a node device.

In the above embodiment, the Ambient-IoT terminals can perform communication based on their respective corresponding frequency domain information. In this way, different Ambient-IoT terminals can use the corresponding frequency domain resources for communication, which reduces interference between communication procedures of different Ambient-IoT terminals.

In conjunction with the embodiments in the first aspect, in some embodiments, the node device includes at least one of the following:
a downlink information sending device or a network device;
an energy source node; and
an uplink information receiving device.

In the above embodiments, according to the different types of node devices, the Ambient-IoT terminal can perform, based on corresponding frequency domain information, communication with different node devices, which reduces interference from other Ambient-IoT terminals during the transmission of information or data.

In conjunction with the embodiments in the first aspect, in some embodiments, performing, by the Ambient-IoT terminal based on the corresponding frequency domain information, the communication with the node device includes at least one of the following:
receiving, by the Ambient-IoT terminal based on the corresponding frequency domain information, downlink information sent from the downlink information sending device, and/or receiving, by the Ambient-IoT terminal based on the corresponding frequency domain information, a downlink signal sent from the energy source node; and
sending, by the Ambient-IoT terminal based on the corresponding frequency domain information, uplink information to an information receiving end device.

In the above embodiments, for different node devices, the Ambient-IoT terminal can receive the downlink information or send the uplink information based on its corresponding frequency domain information, which reduces interference from other Ambient-IoT terminals during the communication procedure.

In conjunction with the embodiments in the first aspect, in some embodiments, the frequency domain information includes at least one of the following:
a downlink operating frequency point supported by the Ambient-IoT terminal;
a downlink operating bandwidth supported by the Ambient-IoT terminal; and
an uplink operating bandwidth supported by the Ambient-IoT terminal.

In the above embodiments, it is exemplified that the frequency domain information corresponding to the Ambient-IoT terminal may include the uplink frequency domain information and/or the downlink frequency domain information, which facilitates effective uplink communication and downlink communication based on the frequency domain information corresponding to the Ambient-IoT terminal.

In conjunction with the embodiments in the first aspect, in some embodiments, the frequency domain information corresponding to the Ambient-IoT terminal satisfies a frequency domain requirement defined by a protocol.

In the above embodiments, the frequency domain requirements that different Ambient-IoT terminals need to satisfy can be defined by the protocol, facilitating that different Ambient-IoT terminals can occupy the corresponding frequency domain information for communication, which reduces communication interference.

In conjunction with the embodiments in the first aspect, in some embodiments, the frequency domain requirement includes at least one of the following:
a plurality of downlink operating frequency points;
a maximum downlink operating bandwidth;
a minimum downlink operating bandwidth; and
a maximum uplink operating bandwidth;
where the downlink operating frequency points are center frequency points defined by the protocol for downlink reception of the Ambient-IoT terminal, the maximum downlink operating bandwidth is a maximum value of a frequency width defined by the protocol that allows for downlink operation of the Ambient-IoT terminal, the minimum downlink operating bandwidth is a minimum value of the frequency width defined by the protocol for the downlink operation of the Ambient-IoT terminal, and the maximum uplink operating bandwidth is a maximum value of a frequency width defined by the protocol that allows for uplink operation of the Ambient-IoT terminal.

In the above embodiments, the relevant frequency domain requirements defined by the protocol are exemplified, and the Ambient-IoT terminal can perform communication based on corresponding frequency domain information when at least one of the frequency domain requirements is satisfied.

In conjunction with the embodiments in the first aspect, in some embodiments, at least one of the maximum downlink operating bandwidth, the minimum downlink operating bandwidth, and the maximum uplink operating bandwidth is defined in a plurality of levels.

In the above embodiments, different levels of frequency domain requirements can be defined by the protocol to adapt to different Ambient-IoT terminals. For example, different Ambient-IoT terminals may satisfy different levels. In this way, different levels of frequency domain requirements can be used to divide or adapt to different channel bandwidths, which reduces communication interference between different Ambient-IoT terminals.

In conjunction with the embodiments in the first aspect, in some embodiments, the maximum uplink operating bandwidth is determined based on an operating frequency of an energy source node, and a frequency offset based on the operating frequency.

In the above embodiments, the uplink sending of the Ambient-IoT terminal relies on the energy source node, and the uplink frequency requirement that the Ambient-IoT terminal needs to satisfy can be defined based on the operating frequency of the energy source node, which ensures that the Ambient-IoT terminal can effectively send uplink information.

In conjunction with the embodiments in the first aspect, in some embodiments, each one of the plurality of downlink operating frequency points corresponds to at least one of the following frequency domain requirements: the maximum downlink operating bandwidth, the minimum downlink operating bandwidth, and the maximum uplink operating bandwidth.

In the above embodiments, for different downlink operating frequency points, the corresponding downlink operating bandwidth and/or uplink operating bandwidth is defined for each downlink operating frequency point. In this way, the Ambient-IoT terminal can perform communication based on a corresponding set of frequency domain information.

In conjunction with the embodiments in the first aspect, in some embodiments, the node device includes a network device, and the method further includes:
sending, from the Ambient-IoT terminal, capability information to the network device, where the capability information includes the frequency domain information corresponding to the Ambient-IoT terminal.

In the above embodiments, the Ambient-IoT terminal can report, by sending the capability information to the node device, the frequency domain information that the Ambient-IoT terminal supports, which facilitates the communication performed by the node device with the Ambient-IoT terminal based on the frequency domain information.

In conjunction with the embodiments in the first aspect, in some embodiments, the node device includes a downlink information sending device, and the method further includes:
receiving, by the Ambient-IoT terminal, indication information sent from the downlink information sending device, where the indication information is used for indicating the Ambient-IoT terminal with the frequency domain information satisfying a given condition to perform the communication.

In the above embodiments, the Ambient-IoT terminal receives the indication information sent from the node device, which is used by the Ambient-IoT terminal to promptly know whether the current communication is necessary. For example, the current communication is only performed when the given condition is satisfied, and not performed when the given condition is not satisfied, which facilitates reduction of communication interference between different Ambient-IoT terminals.

In a second aspect, the embodiments of the present disclosure provide a communication method. The method includes:
performing, by a node device based on frequency domain information corresponding to an Ambient-IoT terminal, communication with the Ambient-IoT terminal.

In the above embodiments, the node device may perform communication with the corresponding Ambient-IoT terminal based on the frequency domain information corresponding to each Ambient-IoT terminal. In this way, the node device can use different frequency domain resources when performing communication with different Ambient-IoT terminals, which reduces interference between communication procedures with different Ambient-IoT terminals.

In conjunction with the embodiments in the second aspect, in some embodiments, the node device includes at least one of the following:
a downlink information sending device or a network device;
an energy source node; and
an uplink information receiving device.

In conjunction with the embodiments in the second aspect, in some embodiments, performing, by the node device based on the frequency domain information corresponding to the Ambient-IoT terminal, the communication with the Ambient-IoT terminal includes at least one of the following:
sending, by the downlink information sending device based on the frequency domain information corresponding to the Ambient-IoT terminal, downlink information to the Ambient-IoT terminal, and/or sending, by the energy source node based on the frequency domain information corresponding to the Ambient-IoT terminal, a downlink signal to the Ambient-IoT terminal; and
receiving, by the uplink information receiving device based on the frequency domain information corresponding to the Ambient-IoT terminal, uplink information sent from the Ambient-IoT terminal.

In conjunction with the embodiments in the second aspect, in some embodiments, the frequency domain information includes at least one of the following:
a downlink operating frequency point supported by the Ambient-IoT terminal;
a downlink operating bandwidth supported by the Ambient-IoT terminal; and
an uplink operating bandwidth supported by the Ambient-IoT terminal.

In conjunction with the embodiments in the second aspect, in some embodiments, the frequency domain information corresponding to the Ambient-IoT terminal satisfies a frequency domain requirement defined by a protocol.

In conjunction with the embodiments in the second aspect, in some embodiments, the frequency domain requirement includes at least one of the following:
a plurality of downlink operating frequency points;
a maximum downlink operating bandwidth;
a minimum downlink operating bandwidth; and
a maximum uplink operating bandwidth;
where the downlink operating frequency points are center frequency points defined by the protocol for downlink reception of the Ambient-IoT terminal, the maximum downlink operating bandwidth is a maximum value of a frequency width defined by the protocol that allows for downlink operation of the Ambient-IoT terminal, the minimum downlink operating bandwidth is a minimum value of the frequency width defined by the protocol for the downlink operation of the Ambient-IoT terminal, and the maximum uplink operating bandwidth is a maximum value of a frequency width defined by the protocol that allows for uplink operation of the Ambient-IoT terminal.

In conjunction with the embodiments in the second aspect, in some embodiments, at least one of the maximum downlink operating bandwidth, the minimum downlink operating bandwidth, and the maximum uplink operating bandwidth is defined in a plurality of levels.

In conjunction with the embodiments in the second aspect, in some embodiments, the maximum uplink operating bandwidth is determined based on an operating frequency of an energy source node, and a frequency offset based on the operating frequency.

In conjunction with the embodiments in the second aspect, in some embodiments, each one of the plurality of downlink operating frequency points corresponds to at least one of the following frequency domain requirements: the maximum downlink operating bandwidth, the minimum downlink operating bandwidth, and the maximum uplink operating bandwidth.

In conjunction with the embodiments in the second aspect, in some embodiments, the node device includes a network device, and the method further includes:
receiving, by the network device, capability information of the Ambient-IoT terminal, where the capability information includes the frequency domain information corresponding to the Ambient-IoT terminal; or
receiving from a core network device, by the network device, the capability information of the Ambient-IoT terminal.

In conjunction with the embodiments in the second aspect, in some embodiments, the node device includes a downlink information sending device, and the method further includes:
sending, by the downlink information sending device, indication information to the Ambient-IoT terminal, where the indication information is used for indicating the Ambient-IoT terminal with the frequency domain information satisfying a given condition to perform the communication.

In a third aspect, the embodiments of the present disclosure provide an Ambient-IoT terminal. The Ambient-IoT terminal includes:
a transceiving module, configured to perform, based on corresponding frequency domain information, communication with a node device.

In a fourth aspect, the embodiments of the present disclosure provide a node device. The node device includes:
a transceiving module, configured to perform, based on frequency domain information corresponding to an Ambient-IoT terminal, communication with the Ambient-IoT terminal.

In a fifth aspect, the embodiments of the present disclosure provide an Ambient-IoT terminal. The Ambient-IoT terminal includes:
one or more processors;
where the terminal is configured to perform the method in the first aspect.

In a sixth aspect, the embodiments of the present disclosure provide a node device. The node device includes:
one or more processors;
where the device is configured to perform the method in the second aspect.

In a seventh aspect, the embodiments of the present disclosure provide a communication system. The communication system includes an Ambient-IoT terminal and a node device;
where the Ambient-IoT terminal is configured to implement the method in the first aspect; and
the node device is configured to implement the method in the second aspect.

In an eighth aspect, the embodiments of the present disclosure provide a storage medium. The storage medium stores an instruction;
where the instruction, when run on a communication device, causes the communication device to perform the method in the first aspect or the second aspect.

In a ninth aspect, the embodiments of the present disclosure provide a program product, where the program product, when run by a communication device, causes the communication device to perform the method described in the optional implementations in the first aspect or the second aspect.

In a tenth aspect, the embodiments of the present disclosure provide a computer program, where the computer program, when run on a computer, causes the computer to perform the method described in the optional implementations in the first aspect or the second aspect.

In an eleventh aspect, the embodiments of the present disclosure provide a chip or a chip system. The chip or chip system includes a processing circuit configured to perform the method described in the optional implementations in the first aspect or the second aspect.

It can be understood that the above-described terminal, network device, communication system, storage medium, program product, computer program, chip, or chip system can all be used for performing the methods provided in the embodiments of the present disclosure. Therefore, the beneficial effects they can achieve can refer to the beneficial effects in the corresponding methods, which will not be repeated here.

The embodiments of the present disclosure are not exhaustive, but merely illustrate a part of the embodiments and do not constitute specific limitations on the scope of protection of the present disclosure. In the absence of contradiction, each step in a certain embodiment may be implemented as an independent embodiment, and respective steps may be arbitrarily combined. For example, a solution with a part of steps removed from a certain embodiment may also be implemented as an independent embodiment, and the order of respective steps in a certain embodiment may be arbitrarily exchanged. In addition, the optional implementations in a certain embodiment may be arbitrarily combined. Additionally, respective embodiments may be arbitrarily combined. For example, a part of or all of the steps of different embodiments may be arbitrarily combined, and a certain embodiment may be arbitrarily combined with the optional implementations of other embodiments.

In the embodiments of the present disclosure, if there are no special descriptions and logical conflicts, the terms and/or descriptions in the embodiments are consistent and may be mutually referenced. Technical features in different embodiments may be combined based on their inherent logical relationships to form new embodiments.

The terms used in the embodiments of the present disclosure are for the purpose of describing specific embodiments only, and are not intended to limit the present disclosure.

In the embodiments of the present disclosure, unless otherwise specified, elements expressed in singular forms, such as "a", "an", "the", "above", "said", "aforementioned", "this", etc. may represent "one and only one", or may represent "one or more", or "at least one", and the like. For example, when articles such as "a", "an", "the" in English are used in translation, the nouns following these articles may be understood as singular expression forms or plural expression forms.

In some embodiments, "a plurality of" may refer to two or more.

In some embodiments, terms such as "at least one of", "one or more", "a plurality of", and "multiple" may be interchangeable with each other.

In some embodiments, the reciting manners such as "at least one of A and B", "A and/or B", "in one situation A, in another situation B", "in response to one situation A, in response to another situation B" may include the following technical solutions depending on the situation: in some embodiments, A (executing A independently of B); in some embodiments, B (executing B independently of A); in some embodiments, selectively executing A and B (executing A and B selectively); and in some embodiments, A and B (executing both A and B). When there are more branches such as A, B, C, etc., the solution is similar to the above.

In some embodiments, the reciting manners such as "A or B" may include the following technical solutions depending on the situation: in some embodiments, A (executing A independently of B); in some embodiments, B (executing B independently of A); in some embodiments, selectively executing A and B (executing A and B selectively). When there are more branches such as A, B, C, etc., the solution is similar to the above.

The prefix words such as "first" and "second" in the embodiments of the present disclosure are only for the purpose of distinguishing different described objects, and do not constitute limitations on the position, order, priority, number, or content, etc. of the described objects. The description for the described objects may refer to the description in the claims or the context of the embodiments, and should not constitute unnecessary limitations due to the use of the prefix words. For example, if the described object is a "field", then the ordinal number before the "field" in the "first field" and the "second field" does not limit the position or order between the "fields", and "first" and "second" do not limit whether the "fields" they modify are in the same message, nor do they limit the sequential order of the "first field" and the "second field". For another example, if the described object is a "level", then the ordinal number before the "level" in the "first level" and the "second level" does not limit the priority between the "levels". For another example, the number of the described objects is not limited by the ordinal number, and may be one or more. Taking the "first device" as an example, the number of the "device" may be one or more. Furthermore, the objects modified by different prefix words may be the same or different. For example, if the described object is a "device", then the "first device" and the "second device" may be the same device or different devices, and may be of the same type or different types. For another example, if the described object is "information", then the "first information" and the "second information" may be the same information or different information, and may be information of the same content or information of different contents.

In some embodiments, "comprising A", "including A", "used for indicating A", and "carrying A" may be interpreted as directly carrying A, or may be interpreted as indirectly indicating A.

In some embodiments, terms such as "in response to...", "in response to determining...", "in the case of...", "when...", "at the time of...", "if...", "assuming...", etc. may be interchangeable with each other.

In some embodiments, terms such as "greater than", "greater than or equal to", "not less than", "more than", "more than or equal to", "not smaller than", "higher than", "higher than or equal to", "not lower than", "above", etc. may be interchangeable with each other. Terms such as "less than", "less than or equal to", "not greater than", "smaller than" "smaller than or equal to", "not more than", "lower than", "lower than or equal to", "not higher than", "below", etc. may be interchangeable with each other.

In some embodiments, apparatuses and devices may be interpreted as physical or virtual, and their names are not limited to the names recited in the embodiments. In some cases, the apparatus or device may be interpreted as "equipment", "device", "circuit", "network element", "node", "function", "unit", "section", "system", "network", "chip", "chip system", "entity", "subject", etc.

In some embodiments, "network" may be interpreted as a device (e.g., an access network device, a core network device, etc.) included in a network.

In some embodiments, the "access network device (AN device)" may also be referred to as "radio access network device (RAN device)", "base station (BS)", "radio base station", "fixed station", and in some embodiments, the "access network device (AN device)" may also be referred to as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, the "terminal" or "terminal device" may also be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" , etc.

In some embodiments, obtaining data, information, etc. may comply with the laws and regulations of the country where it is located.

In some embodiments, data, information, etc. may be obtained after the user consent is obtained.

In addition, each element, each row, or each column in the table of the embodiments of the present disclosure may be implemented as an independent embodiment, and the combination of any element, any row, or any column may also be implemented as an independent embodiment.

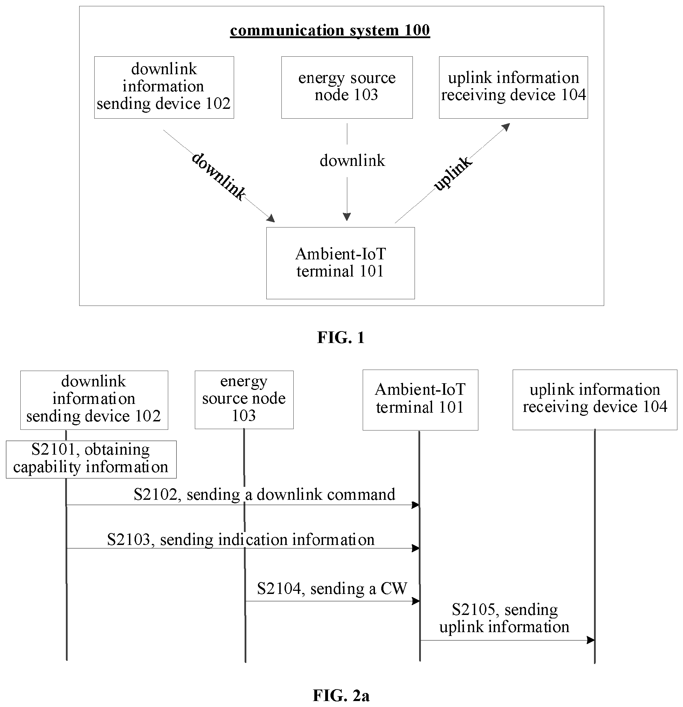

FIG. 1 is a schematic diagram of an architecture of a communication system illustrated according to an embodiment of the present disclosure.

As shown in FIG. 1, the communication system 100 includes a terminal and a node device. In some embodiments, the terminal may be an Ambient-IoT terminal 101. The node device may include at least one of the following: a downlink information sending device 102, an energy source node 103, and an uplink information receiving device 104. For example, the downlink information sending device 102 and the energy source node 103 are integrated into one device, or the downlink information sending device 102 and the uplink information receiving device 104 are integrated into one device, or the energy source node 103 and the uplink information receiving device 104 are integrated into one device, or the downlink information sending device 102, the energy source node 103, and the uplink information receiving device 104 are integrated into one device.

In some embodiments, for example, the terminal 101 may include, but not limited to, at least one of the following: a mobile phone, a wearable device, an IoT device, a vehicle with communication functions, a smart vehicle, a pad, a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart homes.

In some embodiments, the power acquisition and storage capabilities of the Ambient-IoT terminal 101 vary depending on the type and the operating mode of the Ambient-IoT terminal 101. The types of Ambient-IoT terminals 101 include the following three.

Device A: it has no energy storage capability, and is unable to generate or amplify signals independently. For example, device A operates in the mode of using backscattering transmission, also known as backscatter communication.

Device B: it has energy storage capability, and cannot generate signals independently. For example, device B operates in the mode of using backscattering transmission, and the stored energy is used for amplifying reflected signals.

Device C: it has energy storage capability, and can independently generate signals. For example, device C has a radio frequency (RF) module that actively sends signals.

In the three types of Ambient-IoT terminals 101 described above, device C has the strongest capability and the highest terminal cost. Device A has the weakest capability and the lowest terminal cost. In addition, device A and device B can only use the backscattering transmission operating mode and cannot actively send signals, so their terminals can support a smaller coverage range. However, the power consumption of the operating mode of device A or device B is much lower than the power consumption of the operating mode of device C.

In some embodiments, when the downlink information sending device 102 is a network device, the network device may include at least one of the following: an access network device and a core network device.

In some embodiments, for example, the access network device may be a node or device that enables a terminal to access a wireless network. The access network device may include, but is not limited to, at least one of the following: an evolved Node B (eNB) in a 5G communication system, a next generation eNB (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (cloud RAN), a base station in other communication systems, or an access node in a wireless fidelity (WiFi) system.

In some embodiments, the technical solutions of the present disclosure may be applicable to the Open RAN architecture. In this case, the interfaces between access network devices or within an access network device involved in the embodiments of the present disclosure may be changed to internal interfaces of the Open RAN, and the procedures and information interaction between these internal interfaces may be implemented through software or programs.

In some embodiments, the access network device may be composed of a central unit (CU) and a distributed unit (DU), where the CU may also be referred to as a control unit. The structure using the CU-DU may separate the protocol layer of the access network device, with some functions of the protocol layer being placed in and centrally controlled by the CU, and some or all of the remaining functions of the protocol layer distributed in the DU, where the DU is centrally controlled by the CU, but not limited thereto.

In some embodiments, the core network device may be a single device, including one or more network elements; or the core network device may be a plurality of devices or a cluster of devices, each including all or a part of one or more network elements. Network elements may be virtual or physical. The core network includes, for example, at least one of the following: an evolved packet core (EPC), a 5G core network (5GCN), and a next generation core (NGC). Alternatively, the core network device refers to network elements with specific functions, such as an access management function (AMF), a service management function (SMF), etc.

In some embodiments, the energy source node 103 may be a node that provides energy to the Ambient-IoT terminal 101, for example, the energy source node 103 is a continuous wave node (CW node) that provides continuous electromagnetic waves. Based on the description of the above-mentioned embodiments, the energy source node 103 may be a standalone node or a node that performs communication with the Ambient-IoT terminal 101. For example, the energy source node 103 may be a network device or a user equipment (UE) configured to receive uplink information.

In some embodiments, the uplink information receiving device 104 may be another terminal or UE other than the Ambient-IoT terminal 101, and is configured to receive uplink information sent from the Ambient-IoT terminal 101. For example, the uplink information receiving device 104 receives the uplink information sent from the Ambient-IoT terminal 101 based on backscattering communication.

It can be understood that the communication system described in the embodiments of the present disclosure is for the purpose of more clearly illustrating the technical solutions of the embodiments of the present disclosure, and does not constitute a limitation on the technical solutions provided in the embodiments of the present disclosure. As those ordinary skilled in the art will know, with the evolution of the system architecture and the emergence of new service scenarios, the technical solutions provided in the embodiments of the present disclosure are also applicable to similar technical problems.

The following embodiments of the present disclosure may be applied to, but not limited to, the communication system 100 shown in FIG. 1, or to some of the subjects in the communication system 100.

The subjects shown in FIG. 1 are illustrative. The communication system may include all of or some of the subjects in FIG. 1, or may include subjects other than those of FIG. 1. The number and configuration of the subjects are arbitrary, and the connection relationship between the subjects is illustrative. The subjects may not be connected or may be connected, and the connection may be in any way, which may be a direct connection or an indirect connection, or may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X), systems using other communication processing methods, next generation systems expanded based on them, or the like. Furthermore, the embodiments of the present disclosure may be applied to a combination of multiple systems (e.g., a combination of LTE or LTE-A with 5G).

In the embodiments of the present disclosure, the Ambient-IoT terminal 101 may perform communication based on backscattering transmission. The backscattering transmission communication is an extremely low-power modulation and transmission technology that uses the radio frequency signal backscattering transmission principle. In the backscattering transmission communication, a part of the RF signal is reflected when it reaches the surface of an object. The sending node adjusts, according to the intended sending information, the matching between its receiving antenna and impedance, enhances the reflection of the incident RF signal, and modulates the sensing data it obtains onto the reflected signal to complete the sending of the data. Compared to other communication technology, the backscattering transmission communication does not require complex RF structures, reduces the use of power amplifiers, high-precision crystal oscillators, duplexers, high-precision filters, and other devices, nor does it require complex baseband processing. Therefore, the backscattering transmission communication can simplify terminal design and significantly reduce terminal node costs.

In some embodiments, the backscattering transmission communication may be applied to radio frequency identification (RFID) systems. In RFID systems, a receiver (usually an RFID reader) sends an RF excitation signal to activate a passive node (usually an RFID electronic tag), the electronic tag uses the backscattering transmission communication to modulate its own information onto the RF excitation signal, and the RFID reader receives the reflected signal of the passive electronic tag and demodulates it. In this way, information transmission is achieved. However, the RFID technology has the following drawbacks: small coverage distance of the RFID technology, single channel transmission, strict alignment with tags, no power control, etc. The RFID technology has a small coverage distance due to the dual path fading experienced by wireless signals, resulting in high path loss and short effective communication distance.

In the embodiments of the present disclosure, compared to the RFID technology, the Ambient-IoT system requires support for high-density connections, higher requirements for network capacity and interference management in the network, and more importantly, an Ambient-IoT communication manner to effectively reduce interference in the network.

FIG. 2a is a schematic diagram of interaction of a communication method illustrated according to an embodiment of the present disclosure. As shown in FIG. 2a, the embodiment of the present disclosure relates to a communication method, and the method includes the following steps S2101 to S2105.

At step S2101, a downlink information sending device 102 obtains capability information of an Ambient-IoT terminal 101.

Optionally, the downlink information sending device 102 may be a network device, such as a base station.

Optionally, the capability information includes frequency domain information corresponding to the Ambient-IoT terminal 101.

In some embodiments, the frequency domain information corresponding to the Ambient-IoT terminal 101 may include at least one of the following:
a downlink operating frequency point supported by the Ambient-IoT terminal 101;
a downlink operating bandwidth supported by the Ambient-IoT terminal 101; and
an uplink operating bandwidth supported by the Ambient-IoT terminal 101.

Optionally, the downlink operating bandwidth includes the downlink operating frequency point, and the downlink operating bandwidth supported by the Ambient-IoT terminal 101 is used for indicating the frequency range or frequency bandwidth supported by the Ambient-IoT terminal 101 for downlink reception. In the downlink operating bandwidth, the Ambient-IoT terminal 101 can receive all downlink signals within this bandwidth, including downlink commands or downlink information sent from the downlink information sending device 102, and electromagnetic waves (CWs) sent from the energy source node 103. The uplink operating bandwidth supported by the Ambient-IoT terminal 101 is used for indicating the frequency range or frequency bandwidth supported by the Ambient-IoT terminal 101 for uplink sending. In the uplink operating bandwidth, the Ambient-IoT terminal 101 can send uplink information. In some embodiments, the uplink information is sent through the reflection of the CW by the Ambient-IoT terminal 101, for example, the uplink information is the information sent through backscattering transmission, generated by the Ambient-IoT terminal 101 by modulating the data to be transmitted onto the CW. Optionally, the uplink sending behavior of the Ambient-IoT terminal 101 may refer to the description of the following embodiments.

In some embodiments, step S2101 may include the following step S2101-11. The example is as follows.

At step S2101-11, the Ambient-IoT terminal 101 sends the capability information to the network device.

Optionally, the network device may be a base station or a core network device.

Optionally, for different Ambient-IoT terminals 101, each Ambient-IoT terminal 101 may report its own capability information separately.

Optionally, the downlink information sending device 102 receives the capability information of each Ambient-IoT terminal 101.

In this embodiment, the Ambient-IoT terminal 101 reports, by reporting the capability information to the downlink information sending device 102, the frequency domain information corresponding to the Ambient-IoT terminal 101 itself and supported by the Ambient-IoT terminal 101 itself.

In some embodiments, step S2101 may include the following step S2101-21. The example is as follows.

At step S2101-21, the network device obtains the capability information of the Ambient-IoT terminal 101 from the core network device.

Optionally, the network device may be a base station.

Optionally, the downlink information sending device 102 may selectively obtain, from the core network device, the required capability information of one or more Ambient-IoT terminals 101, thereby obtaining the frequency domain information supported by the one or more Ambient-IoT terminals 101.

Optionally, step S2101 may be omitted, or step S2101-11 may be omitted, or step S2101-21 may be omitted.

At step S2102, the downlink information sending device 102 sends a downlink command to the Ambient-IoT terminal 101.

Optionally, the downlink command is the downlink information sent from the downlink information sending device 102, and the downlink sending behavior of this step is performed based on the frequency domain information corresponding to the Ambient-IoT terminal 101. For example, the network device sends the downlink command on the downlink operating frequency point supported by the Ambient-IoT terminal 101.

Optionally, the downlink command may be used for indicating the uplink sending operation of the Ambient-IoT terminal 101, such as indicating the uplink sending data or content of the Ambient-IoT terminal 101.

Optionally, the Ambient-IoT terminal 101 performs uplink sending based on the downlink command.

Optionally, the downlink information sending device 102 may indicate the Ambient-IoT terminal 101 to perform response based on the downlink command. For example, the downlink command indicates the Ambient-IoT terminal 101 to respond, or the Ambient-IoT terminal 101 that satisfies a given condition is indicated through step S2103 to respond.

Optionally, the Ambient-IoT terminal 101 receives the downlink command based on the frequency domain information supported by the Ambient-IoT terminal 101.

At step S2103, the downlink information sending device 102 sends indication information to the Ambient-IoT terminal 101.

Optionally, the indication information may be sent separately, or sent in the downlink command of step S2102. The downlink sending behavior of this step is performed based on the frequency domain information corresponding to the Ambient-IoT terminal 101. For example, the network device sends the indication information on the downlink operating frequency point supported by the Ambient-IoT terminal 101.

Optionally, the indication information is used for indicating the Ambient-IoT terminal 101 with the frequency domain information satisfying the given condition to perform the communication. In some embodiments, performing the communication here includes: the Ambient-IoT terminal 101 responding to the downlink information sending device 102, and/or the Ambient-IoT terminal 101 performing the uplink sending.

Optionally, the given condition may be a threshold condition indicated, defined, or configured based on the frequency domain information supported by the Ambient-IoT terminal 101, and is used for determining whether the Ambient-IoT terminal 101 is a specific capability device. For example, if the network device 102 indicates the Ambient-IoT terminal 101 with a downlink operating bandwidth of less than or equal to 5 MHz to respond and/or perform the uplink sending, then the Ambient-IoT terminal 101 will respond and/or perform the uplink sending only if its supported downlink operating bandwidth satisfies this condition.

Optionally, the Ambient-IoT terminal 101 receives the indication information according to its supported frequency domain information.

In some embodiments, step S2103 may be omitted. During the execution of step S2103, the Ambient-IoT terminal 101 needs to determine whether it satisfies the given condition. If the Ambient-IoT terminal 101 satisfies the given condition, the Ambient-IoT terminal 101 may execute steps S2104 to S2105, ensuring that the communication of this part of the device is not interfered with.

In an example, the network device applies two downlink operating frequency points (operating frequency point 1 and operating frequency point 2), and there are Ambient-IoT terminals 101 with downlink operating bandwidths of 5 MHz and 10 MHz on the two operating frequency points. Assuming that the CW node is at the operating frequency point, the uplink operating bandwidth of the Ambient-IoT terminal 101 is covered within the downlink operating bandwidth. In some embodiments, there are two channel bandwidth configurations for operating frequency point 1 and operating frequency point 2, with configuration 1 having a bandwidth magnitude of 5 MHz and configuration 2 having a bandwidth magnitude of 10 MHz.

When configuration 1 is used on operating frequency point 1 and configuration 2 is used on operating frequency point 2, if the network device sends a downlink command on operating frequency point 1 and requests the Ambient-IoT terminal 101 to respond, the device with an operating bandwidth ≤ 5 MHz may be requested through the indication information to respond; and if the network device sends a downlink command on operating frequency point 2 and requests the Ambient-IoT terminal 101 to respond, the device with an operating bandwidth greater than 5 MHz and ≤ 10 MHz may be requested through the indication information to respond.

When configuration 2 is used on operating frequency point 1 and configuration 1 is used on operating frequency point 2, if the network device sends a downlink command on operating frequency point 2 and requests the Ambient-IoT terminal 101 to respond, the device with an operating bandwidth ≤ 5 MHz may be requested through the indication information to respond; if the network device sends a downlink command on operating frequency point 1 and requests the Ambient-IoT terminal 101 to respond, the device with an operating bandwidth greater than 5 MHz and ≤ 10 MHz may be requested through the indication information to respond.

Thus, operating frequency point 1 and operating frequency point 2 can support, in a time-division manner, communication of all 5 MHz and 10 MHz Ambient-IoT terminals 101, while reducing the frequency overhead of the entire Ambient-IoT system from 20 MHz (10 MHz per operating frequency point) to 15 MHz at corresponding time points.

At step S2104, the energy source node 103 sends the CW to the Ambient-IoT terminal 101.

Optionally, for example, the energy source node 103 is a CW node, and the CW is a downlink signal sent from the CW node, the downlink sending behavior in this step is performed based on the frequency domain information corresponding to the Ambient-IoT terminal 101. For example, the CW node sends electromagnetic waves on the downlink operating frequency point supported by the Ambient-IoT terminal 101.

In some embodiments, the terminal 101 receives the CW based on its supported frequency domain information, and uses the CW for backscattering transmission.

Optionally, the CW may have a constant amplitude.

At step S2105, the Ambient-IoT terminal 101 sends uplink information to the uplink information receiving device 104.

In some embodiments, after receiving the CW, the Ambient-IoT terminal 101 modulates the data that needs to be sent uplink onto the CW, forming the uplink information that needs to be reflected and sent.

In some embodiments, the Ambient-IoT terminal 101 sends the uplink information within its supported uplink operating bandwidth.

Optionally, the uplink information receiving device 104 receives the uplink information within the uplink operating bandwidth supported by the Ambient-IoT terminal 101.

In some embodiments, the Ambient-IoT terminal 101 described above may be applicable to any Ambient-IoT terminal 101. For different Ambient-IoT terminals 101, their supported or corresponding frequency domain information is different.

In some embodiments, the frequency domain information corresponding to different Ambient-IoT terminals 101 may be defined by a protocol.

In some embodiments, the frequency domain information corresponding to the Ambient-IoT terminal 101 satisfies a frequency domain requirement defined by the protocol.

Optionally, the frequency domain requirements defined by the protocol satisfy all relevant Ambient-IoT terminals 101, and for a single Ambient-IoT terminal 101, it may satisfy a part of the frequency domain requirements.

In some embodiments, the frequency domain requirement includes at least one of the following:
a plurality of downlink operating frequency points;
a maximum downlink operating bandwidth;
a minimum downlink operating bandwidth; and
a maximum uplink operating bandwidth;
where the downlink operating frequency points are center frequency points defined by the protocol for downlink reception of the Ambient-IoT terminal 101, the maximum downlink operating bandwidth is a maximum value of a frequency width defined by the protocol that allows for downlink operation of the Ambient-IoT terminal 101, the minimum downlink operating bandwidth is a minimum value of the frequency width defined by the protocol for the downlink operation of the Ambient-IoT terminal 101, and the maximum uplink operating bandwidth is a maximum value of a frequency width defined by the protocol that allows for uplink operation of the Ambient-IoT terminal 101.

Optionally, the plurality of downlink operating frequency points defined by the protocol are applicable to a plurality of or all Ambient-IoT terminals 101, and the downlink operating frequency point supported by any Ambient-IoT terminal 101 is at least one of the plurality of downlink operating frequency points. Optionally, based on the low complexity characteristic of the Ambient-IoT terminal 101, the Ambient-IoT terminal 101 can obtain or determine, at the time of production, one or more downlink operating frequency points supported by the Ambient-IoT terminal 101 itself.

In an example, one example of the Ambient-IoT terminal 101 supporting operation on a plurality of downlink operating frequency points is that the Ambient-IoT terminal 101 supports two downlink operating frequency points (frequency point 1 and frequency point 2), receives downlink information at frequency point 1, and receives the CW at frequency point 2. In this example, one possible deployment situation is that frequency point 1 is on the frequency division duplexing (FDD) downlink (DL) spectrum, and frequency point 2 is on the FDD uplink (UL) spectrum.

In another example, one example of the Ambient-IoT terminal 101 supporting operation on a plurality of downlink operating frequency points is that the Ambient-IoT terminal 101 supports two downlink operating frequency points (frequency point 1 and frequency point 2), and can receive the downlink information and the CW at both frequency point 1 and frequency point 2.

Optionally, one possible hardware implementation is that the downlink operating frequency point supported by the Ambient-IoT terminal 101 is the center frequency point of the filter in the Ambient-IoT terminal 101, and the downlink operating bandwidth supported by the Ambient-IoT terminal 101 is the bandwidth of the filter of the Ambient-IoT terminal 101. If the Ambient-IoT terminal 101 supports operation on a plurality of downlink operating frequency points, it may correspond to filters of the plurality of downlink operating frequency points.

Optionally, the downlink operating frequency point may be the frequency point on which the node device sends downlink information. For example, the downlink operating frequency point includes the frequency point on which the downlink information sending device 102 sends downlink information to the Ambient-IoT terminal 101 in steps S2102 to S2103, and the frequency point on which the energy source node 103 sends downlink information to the Ambient-IoT terminal 101 in step S2104. In some embodiments, the energy source node 103 may be a CW node.

Optionally, the above frequency domain requirements may have corresponding relationships. The corresponding relationships may be defined by the protocol. For example, each one of the plurality of downlink operating frequency points corresponds to at least one of the following frequency domain requirements: the maximum downlink operating bandwidth, the minimum downlink operating bandwidth, and the maximum uplink operating bandwidth. The corresponding relationship of each downlink operating frequency point may be defined by the protocol.

Optionally, each of the maximum downlink operating bandwidth and the minimum downlink operating bandwidth includes a corresponding downlink operating frequency point.

Optionally, at least one of the maximum downlink operating bandwidth, the minimum downlink operating bandwidth, and the maximum uplink operating bandwidth is defined in a plurality of levels.

In an example, the maximum downlink operating bandwidth is divided into the following different levels: Wᵣₘₐₓ₁, Wᵣₘₐₓ₂, Wᵣₘₐₓ₃....... Different Ambient-IoT terminals 101 may support different levels of downlink operating bandwidths. For example, the downlink operating bandwidth supported by Ambient-IoT terminal 101 A is Wᵣₘₐₓ₁, and the downlink operating bandwidth supported by Ambient-IoT terminal 101 B is Wᵣₘₐₓ₂. For any Ambient-IoT terminal 101, the Ambient-IoT terminal 101 will receive signals within its supported downlink operating bandwidth, and reflect the signals received within that downlink receiving bandwidth during backscattering transmission.

Optionally, in the Ambient-IoT communication system, the maximum downlink operating bandwidths that different Ambient-IoT terminals 101 need to satisfy may be defined, and the downlink operating bandwidth supported by each Ambient-IoT terminal 101 may be limited within a certain range. The downlink information sending device 102 may receive and send other information on the spectrum outside the downlink operating bandwidth supported by the Ambient-IoT terminal 101, such as receiving and sending another parallel independent Ambient-IoT channel, or receiving and sending NR channels.

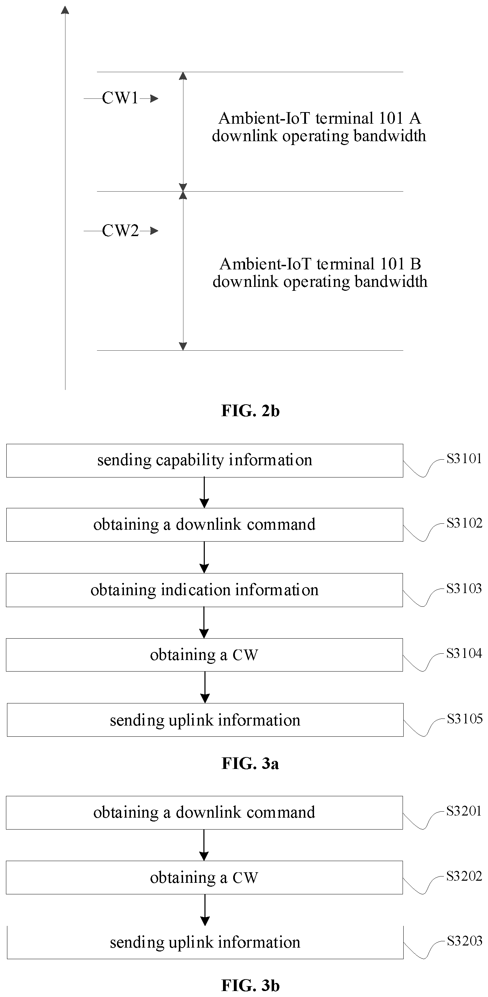

As shown in FIG. 2b, based on the different downlink operating bandwidths corresponding to Ambient-IoT terminals 101 A and B, Ambient-IoT terminals 101 A and B will form isolation in the frequency domain, which is conducive to reducing mutual interference in their communication procedures. In combination with the example shown in FIG. 2b, based on the different frequency domain information corresponding to different Ambient-IoT terminals 101, the available spectrum may be divided into a plurality of sub-channels on frequency resources, each sub-channel occupying a fixed bandwidth, and the frequency domain between sub-channels is orthogonal. For different Ambient-IoT terminals 101, each Ambient-IoT terminal 101 occupies its corresponding frequency domain information, such as occupying one or more sub-channels.

Optionally, the Ambient-IoT terminal 101 may be indicated by the network device to use one or more sub-channels, or may select one or more sub-channels through an algorithm. For the Ambient-IoT terminal 101 that uses backscattering transmission, the operating bandwidth of its antenna is relatively wide (such as tens of MHz). If the energy source node 103 emits energy on a plurality of frequency points within the operating bandwidth range of the Ambient-IoT terminal 101, the Ambient-IoT terminal 101 may receive energy on these plurality of frequency points, and perform backscattering transmission on all of them, without the capability of only performing backscattering transmission on the selected sub-channel energy. Based on this, the sub-channel that the Ambient-IoT terminal 101 can use depends on the operating frequency of the energy source node 103, that is, the downlink operating frequency.

In an example, the minimum downlink operating bandwidth is divided into the following different levels: Wᵣₘᵢₙ₁, Wᵣₘᵢₙ₂, Wᵣₘᵢₙ₃....... Different Ambient-IoT terminals 101 may support different levels of downlink operating bandwidths, for example, the downlink operating bandwidth supported by Ambient-IoT terminal 101 A is Wᵣₘᵢₙ₁, and the downlink operating bandwidth supported by Ambient-IoT terminal 101 B is Wᵣₘᵢₙ₂. For any Ambient-IoT terminal 101, based on the minimum downlink operating bandwidth supported by the Ambient-IoT terminal 101, the Ambient-IoT terminal 101 may receive signals near the downlink operating frequency point. The minimum downlink operating bandwidth may also provide reference for the frequency on which the network device sends downlink signals or the CW node sends CW signals. For example, in order to ensure that the Ambient-IoT terminal 101 can receive the downlink signal and the CW, the sending frequency of the CW of the downlink signal is limited within the minimum downlink operating bandwidth of the downlink operating frequency point supported by the Ambient-IoT terminal 101.

Based on the above example, for a specific Ambient-IoT terminal 101, it may only support operation on one downlink operating frequency point, and its supported downlink operating bandwidth is a maximum downlink operating bandwidth or a minimum downlink operating bandwidth in a certain level that satisfies the protocol requirement.

In an example, the maximum uplink operating bandwidth is divided into the following different levels: Wₜ₁, Wₜ₂, Wₜ₃....... The uplink operating bandwidths supported by different Ambient-IoT terminals 101 may correspond to different levels, for example, the uplink operating bandwidth supported by Ambient-IoT terminal 101 A is Wₜ₁, and the uplink operating bandwidth supported by Ambient-IoT terminal 101 B is Wₜ₂. For any Ambient-IoT terminal 101, the maximum uplink operating bandwidth supported by the Ambient-IoT terminal 101 may limit the bandwidth of the uplink sending signal of the Ambient-IoT terminal 101 within a certain range, which is beneficial for the network device to also receive and send other information on the spectrum outside of this uplink operating bandwidth, such as receiving and sending another parallel independent Ambient-IoT channel, or receiving and sending NR channels.

In an example, the maximum uplink operating bandwidth is determined based on an operating frequency of the energy source node 103, and a frequency offset based on the operating frequency.

Optionally, based on the description of the above-mentioned embodiments, the operating frequency of the energy source node 103, such as the CW node, may be the downlink operating frequency point. Optionally, the uplink operating frequency point supported by the Ambient-IoT terminal 101 is related to the downlink operating frequency point. For example, if the frequency offset is 0, the uplink operating frequency point supported by the Ambient-IoT terminal 101 is the same as the downlink operating frequency point. If the frequency offset is greater than 0, the maximum uplink operating bandwidth that the Ambient-IoT terminal 101 satisfies may be determined according to the frequency offset and the downlink operating frequency point.

Optionally, the magnitude of the frequency offset is related to the hardware characteristic of the Ambient-IoT terminal 101. The frequency offset may be a fixed value, and if supported by hardware, the frequency offset may also support a plurality of fixed values or may be dynamically adjusted values.

Optionally, the uplink sending bandwidth of the Ambient-IoT terminal 101 depends on its capability of shifting the frequency spectrum when the CW reflection is performed, where the uplink sending bandwidth may be defined as the magnitude of the frequency offset of the reflected wave of the Ambient-IoT terminal 101 relative to the CW. For example, the maximum uplink operating bandwidth is defined as offset1, that is, the maximum allowable frequency offset of the frequency of the reflected wave of the Ambient-IoT terminal 101 compared to the frequency of the CW is offset1.

In this example, based on the frequency offset, assuming that the operating frequency of the CW node is f1, if the frequency offset is a single sideband offset, the frequency range of the maximum uplink operating bandwidth is [f1, f1+offset1] or [f1-offset1, f1]. If the frequency offset is a double sideband offset, the frequency range of the maximum uplink operating bandwidth is [f1-offset1, f1+offset1].

Based on the above example, different Ambient-IoT terminals 101 may have different capabilities, for example, including the following categories:
the Ambient-IoT terminal 101 only supporting operation on one fixed downlink operating frequency point, and the uplink operating bandwidth of the Ambient-IoT terminal 101 being also uniquely fixed;
the Ambient-IoT terminal 101 only supporting operation on one fixed downlink operating frequency point, and the uplink operating bandwidth of the Ambient-IoT terminal 101 having a plurality of different frequency ranges; and
the Ambient-IoT terminal 101 supporting operation on a plurality of downlink operating frequency points, and the uplink operating bandwidth of the Ambient-IoT terminal 101 having a plurality of different frequency ranges.

Based on the description of the above-mentioned embodiments, the Ambient-IoT terminal 101 may report its capability to report the frequency domain information supported by the Ambient-IoT terminal 101, enabling the network device to obtain the frequency domain information of different Ambient-IoT terminals 101.

In some embodiments, the Ambient-IoT terminal 101 may not report its capability information, that is, the corresponding frequency domain information. For example, the Ambient-IoT terminal 101 directly attempts to receive downlink information of the network device on the downlink operating frequency point of the Ambient-IoT terminal 101 itself. The network device directly sets, according to the maximum operating bandwidth and the minimum operating bandwidth corresponding to that operating frequency point, the sending frequency of downlink information, the frequency of the CW, and the system bandwidth of ambient IoT system.

In some embodiments, the names of information and the like are not limited to the names recited in the embodiments, and terms such as "information", "message", "signal", "signaling", "report", "configuration", "indication", "instruction", "command", "channel", "parameter", "domain", "field", etc. may be interchangeable with each other.

In some embodiments, "obtain", "acquire", "obtaining", "receive", "transmit", "bidirectional transmission", "sending and/or receiving" may be interchangeable with each other, which may be interpreted as receiving from other subjects, obtaining from the protocol, obtaining from the higher layer, obtaining through self-processing, autonomous implementation, and other meanings.

In some embodiments, terms such as "send", "emit", "report", "issue", "transmit", "bidirectional transmission", "sending and/or receiving" may be interchangeable with each other.

In some embodiments, terms such as "radio", "wireless", "radio access network (RAN)", "access network (AN)", "RAN based", etc. may be interchangeable with each other.

In some embodiments, terms such as "timepoint", "time point", "time", "time position", etc. may be interchangeable with each other, and terms such as "duration", "time period", "time window", "window", "time", etc. may be interchangeable with each other.

In some embodiments, terms such as "component carrier (CC)", "cell", "frequency carrier", "carrier frequency", etc. may be interchangeable with each other.

In some embodiments, terms such as "certain", "preset", "predetermined", "given", "indicated", "one", "any", "first", etc. may be interchangeable with each other. "Certain A", "preset A", "predetermined A", "set A", "indicated A", "one A", "any A", "first A", etc. may be interpreted as A predetermined in the protocol or obtained through setting, configuration, or indication, or may be interpreted as a certain A, an A, any A, or the first A, etc., but not limited thereto.

In some embodiments, the determination or judgment may be made through a value represented by 1 bit (0 or 1), a true false value (boolean) represented by true or false, or a comparison between numerical values (such as comparison with a preset value), but not limited thereto.

In some embodiments, "not expecting to receive" may be interpreted as not receiving on time domain resources and/or frequency domain resources, or may be interpreted as not performing subsequent processing on the received data or the like. "Not expecting to send" may be interpreted as not sending, or may be interpreted as sending but not expecting the receiver to respond to the content being sent.

The method involved in the embodiments of the present disclosure may include at least one of steps S2101 to S2105. For example, the method includes steps S2102, S2104, and S2105.

In some embodiments, at least one of steps S2101 and S2103 is optional, and one or more of these steps may be omitted or replaced in different embodiments.

In some embodiments, steps S2102 and S2103 may be executed synchronously or in a swapped order.

In some embodiments, reference may be made to other optional implementations recited before or after the specification corresponding to FIG. 2a.

FIG. 3a is a schematic diagram of a communication method illustrated according to an embodiment of the present disclosure. As shown in FIG. 3a, the embodiment of the present disclosure relates to a communication method performed by an Ambient-IoT terminal 101. The method includes the following steps S3101 to S3105.

At step S3101, capability information is sent.

In some embodiments, the implementation of step S3101 may refer to the optional implementation of step S2101, which will not be repeated here.

At step S3102, a downlink command is obtained.

In some embodiments, the implementation of step S3102 may refer to the optional implementation of step S2102, which will not be repeated here.

At step S3103, indication information is obtained.

In some embodiments, the implementation of step S3103 may refer to the optional implementation of step S2103, which will not be repeated here.

At step S3104, a CW is obtained.

In some embodiments, the implementation of step S3104 may refer to the optional implementation of step S2104, which will not be repeated here.

At step S3105, uplink information is sent.

In some embodiments, the implementation of step S3105 may refer to the optional implementation of step S2105, which will not be repeated here.

The method involved in the embodiments of the present disclosure may include at least one of steps S3101 to S3105. For example, the method includes steps S3102, S3104, and S3105.

In some embodiments, at least one of steps S3101 and S3103 is optional, and one or more of these steps may be omitted or replaced in different embodiments.

In some embodiments, steps S3102 and S3103 may be executed synchronously or in a swapped order.

In some embodiments, reference may be made to other optional implementations recited before or after the specification corresponding to FIG. 3a.

FIG. 3b is a schematic diagram of a communication method illustrated according to an embodiment of the present disclosure. As shown in FIG. 3b, the embodiment of the present disclosure relates to a communication method performed by an Ambient-IoT terminal 101. The method includes the following steps S3201 to S3203.

At step S3201, a downlink command is obtained.

In some embodiments, the implementation of step S3201 may refer to the optional implementation of step S2102, which will not be repeated here.

At step S3202, a CW is obtained.

In some embodiments, the implementation of step S3202 may refer to the optional implementation of step S2104, which will not be repeated here.

At step S3203, uplink information is sent.

In some embodiments, the implementation of step S3203 may refer to the optional implementation of step S2105, which will not be repeated here.

In some embodiments, reference may be made to other optional implementations recited before or after the specification corresponding to FIG. 3b.

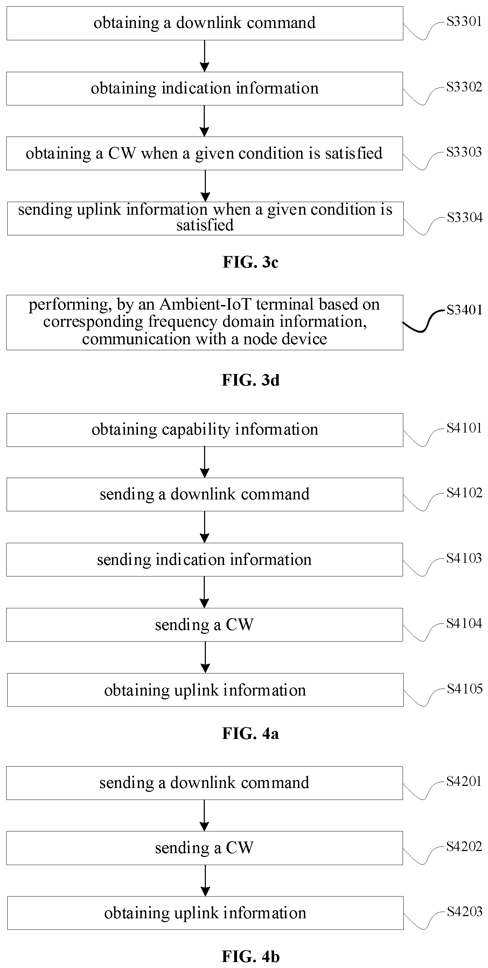

FIG. 3c is a schematic diagram of a communication method illustrated according to an embodiment of the present disclosure. As shown in FIG. 3c, the embodiment of the present disclosure relates to a communication method performed by an Ambient-IoT terminal 101. The method includes the following steps S3301 to S3304.

At step S3301, a downlink command is obtained.

In some embodiments, the implementation of step S3301 may refer to the optional implementation of step S2102, which will not be repeated here.

At step S3302, indication information is obtained.

In some embodiments, the implementation of step S3302 may refer to the optional implementation of step S2103, which will not be repeated here.

At step S3303, a CW is obtained when a given condition is satisfied.

In some embodiments, the implementation of step S3303 may refer to the optional implementation of step S2104, which will not be repeated here.

At step S3304, uplink information is sent when a given condition is satisfied.

In some embodiments, the implementation of step S3304 may refer to the optional implementation of step S2105, which will not be repeated here.

In some embodiments, reference may be made to other optional implementations recited before or after the specification corresponding to FIG. 3c.

FIG. 3d is a schematic diagram of a communication method illustrated according to an embodiment of the present disclosure. As shown in FIG. 3d, the embodiment of the present disclosure relates to a communication method performed by an Ambient-IoT terminal 101. The method includes the following step S3401.

At step S3401, the Ambient-IoT terminal performs, based on corresponding frequency domain information, communication with a node device.

In some embodiments, the implementation of step S3401 may refer to the optional implementation of steps S2102, S2104, and S2105, which will not be repeated here.

In some embodiments, the node device includes at least one of the following:
a downlink information sending device or a network device;
an energy source node; and
an uplink information receiving device.

In some embodiments, performing, by the Ambient-IoT terminal based on the corresponding frequency domain information, the communication with the node device includes at least one of the following:
receiving, by the Ambient-IoT terminal based on the corresponding frequency domain information, downlink information sent from the downlink information sending device, and/or receiving, by the Ambient-IoT terminal based on the corresponding frequency domain information, a downlink signal sent from the energy source node; and
sending, by the Ambient-IoT terminal based on the corresponding frequency domain information, uplink information to an information receiving end device.

In some embodiments, the frequency domain information includes at least one of the following:
a downlink operating frequency point supported by the Ambient-IoT terminal;
a downlink operating bandwidth supported by the Ambient-IoT terminal; and
an uplink operating bandwidth supported by the Ambient-IoT terminal.

In some embodiments, the frequency domain information corresponding to the Ambient-IoT terminal satisfies a frequency domain requirement defined by a protocol.

Optionally, the frequency domain requirement includes at least one of the following:
a plurality of downlink operating frequency points;
a maximum downlink operating bandwidth;
a minimum downlink operating bandwidth; and
a maximum uplink operating bandwidth;
where the downlink operating frequency points are center frequency points defined by the protocol for downlink reception of the Ambient-IoT terminal, the maximum downlink operating bandwidth is a maximum value of a frequency width defined by the protocol that allows for downlink operation of the Ambient-IoT terminal, the minimum downlink operating bandwidth is a minimum value of the frequency width defined by the protocol for the downlink operation of the Ambient-IoT terminal, and the maximum uplink operating bandwidth is a maximum value of a frequency width defined by the protocol that allows for uplink operation of the Ambient-IoT terminal.

Optionally, at least one of the maximum downlink operating bandwidth, the minimum downlink operating bandwidth, and the maximum uplink operating bandwidth is defined in a plurality of levels.

Optionally, the maximum uplink operating bandwidth is determined based on an operating frequency of an energy source node, and a frequency offset based on the operating frequency.

Optionally, each one of the plurality of downlink operating frequency points corresponds to at least one of the following frequency domain requirements: the maximum downlink operating bandwidth, the minimum downlink operating bandwidth, and the maximum uplink operating bandwidth.

In some embodiments, the node device includes a network device, and the method further includes:
sending, from the Ambient-IoT terminal, capability information to the network device, where the capability information includes the frequency domain information corresponding to the Ambient-IoT terminal.

In some embodiments, the node device includes a downlink information sending device, and the method further includes:
receiving, by the Ambient-IoT terminal, indication information sent from the downlink information sending device, where the indication information is used for indicating the Ambient-IoT terminal with the frequency domain information satisfying a given condition to perform the communication.

In some embodiments, reference may be made to other optional implementations recited before or after the specification corresponding to FIG. 3d.

FIG. 4a is a schematic diagram of a communication method illustrated according to an embodiment of the present disclosure. As shown in FIG. 4a, the embodiment of the present disclosure relates to a communication method performed by a node device. The method includes the following steps S4101 to S4105.

At step S4101, capability information is obtained.

In some embodiments, the implementation of step S4101 may refer to the optional implementation of step S2101, which will not be repeated here.

At step S4102, a downlink command is sent.

In some embodiments, the implementation of step S4102 may refer to the optional implementation of step S2102, which will not be repeated here.

At step S4103, indication information is sent.

In some embodiments, the implementation of step S4103 may refer to the optional implementation of step S2103, which will not be repeated here.

At step S4104, a CW is sent.

In some embodiments, the implementation of step S4104 may refer to the optional implementation of step S2104, which will not be repeated here.

At step S4105, uplink information is obtained.

In some embodiments, the implementation of step S4105 may refer to the optional implementation of step S2105, which will not be repeated here.

The method involved in the embodiments of the present disclosure may include at least one of steps S4101 to S4105. For example, the method includes steps S4102, S4104, and S4105.

In some embodiments, at least one of steps S4101 and S4103 is optional, and one or more of these steps may be omitted or replaced in different embodiments.

In some embodiments, steps S4102 and S4103 may be executed synchronously or in a swapped order.

In some embodiments, reference may be made to other optional implementations recited before or after the specification corresponding to FIG. 4a.

FIG. 4b is a schematic diagram of a communication method illustrated according to an embodiment of the present disclosure. As shown in FIG. 4b, the embodiment of the present disclosure relates to a communication method performed by a node device. The method includes the following steps S4201 to S4203.

At step S4201, a downlink command is sent.

In some embodiments, the implementation of step S4201 may refer to the optional implementation of step S2102, which will not be repeated here.

At step S4202, a CW is sent.

In some embodiments, the implementation of step S4202 may refer to the optional implementation of step S2104, which will not be repeated here.

At step S4203, uplink information is obtained.

In some embodiments, the implementation of step S4203 may refer to the optional implementation of step S2105, which will not be repeated here.

In some embodiments, reference may be made to other optional implementations recited before or after the specification corresponding to FIG. 4b.

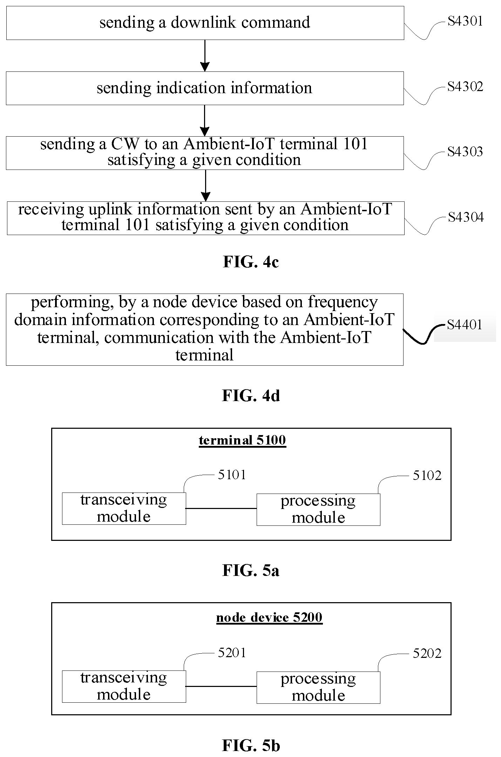

FIG. 4c is a schematic diagram of a communication method illustrated according to an embodiment of the present disclosure. As shown in FIG. 4c, the embodiment of the present disclosure relates to a communication method performed by a node device. The method includes the following steps S4301 to S4304.

At step S4301, a downlink command is sent.

In some embodiments, the implementation of step S4301 may refer to the optional implementation of step S2102, which will not be repeated here.

At step S4302, indication information is sent.

In some embodiments, the implementation of step S4302 may refer to the optional implementation of step S2103, which will not be repeated here.

At step S4303, a CW is sent to the Ambient-IoT terminal 101 satisfying a given condition.

In some embodiments, the implementation of step S4303 may refer to the optional implementation of step S2104, which will not be repeated here.

At step S4304, uplink information sent from the Ambient-IoT terminal 101 satisfying a given condition is received.

In some embodiments, the implementation of step S4304 may refer to the optional implementation of step S2105, which will not be repeated here.

In some embodiments, reference may be made to other optional implementations recited before or after the specification corresponding to FIG. 4c.

FIG. 4d is a schematic diagram of a communication method illustrated according to an embodiment of the present disclosure. As shown in FIG. 4d, the embodiment of the present disclosure relates to a communication method performed by a node device. The method includes the following step S4401.

At step S4401, the node device performs, based on frequency domain information corresponding to an Ambient-IoT terminal, communication with the Ambient-IoT terminal.

In some embodiments, the implementation of step S4401 may refer to the optional implementation of steps S2102, S2104, and S2105, which will not be repeated here.

In some embodiments, the node device includes at least one of the following:
a downlink information sending device or a network device;
an energy source node; and
an uplink information receiving device.

In some embodiments, performing, by the node device based on the frequency domain information corresponding to the Ambient-IoT terminal, the communication with the Ambient-IoT terminal includes at least one of the following:
sending, by the downlink information sending device based on the frequency domain information corresponding to the Ambient-IoT terminal, downlink information to the Ambient-IoT terminal, and/or sending, by the energy source node based on the frequency domain information corresponding to the Ambient-IoT terminal, a downlink signal to the Ambient-IoT terminal; and
receiving, by the uplink information receiving device based on the frequency domain information corresponding to the Ambient-IoT terminal, uplink information sent from the Ambient-IoT terminal.

In some embodiments, the frequency domain information includes at least one of the following:
a downlink operating frequency point supported by the Ambient-IoT terminal;
a downlink operating bandwidth supported by the Ambient-IoT terminal; and
an uplink operating bandwidth supported by the Ambient-IoT terminal.

In some embodiments, the frequency domain information corresponding to the Ambient-IoT terminal satisfies a frequency domain requirement defined by a protocol.

Optionally, the frequency domain requirement includes at least one of the following:
a plurality of downlink operating frequency points;
a maximum downlink operating bandwidth;
a minimum downlink operating bandwidth; and
a maximum uplink operating bandwidth;
where the downlink operating frequency points are center frequency points defined by the protocol for downlink reception of the Ambient-IoT terminal, the maximum downlink operating bandwidth is a maximum value of a frequency width defined by the protocol that allows for downlink operation of the Ambient-IoT terminal, the minimum downlink operating bandwidth is a minimum value of the frequency width defined by the protocol for the downlink operation of the Ambient-IoT terminal, and the maximum uplink operating bandwidth is a maximum value of a frequency width defined by the protocol that allows for uplink operation of the Ambient-IoT terminal.

Optionally, at least one of the maximum downlink operating bandwidth, the minimum downlink operating bandwidth, and the maximum uplink operating bandwidth is defined in a plurality of levels.

Optionally, the maximum uplink operating bandwidth is determined based on an operating frequency of an energy source node, and a frequency offset based on the operating frequency.

Optionally, each one of the plurality of downlink operating frequency points corresponds to at least one of the following frequency domain requirements: the maximum downlink operating bandwidth, the minimum downlink operating bandwidth, and the maximum uplink operating bandwidth.

In some embodiments, the node device includes a network device, and the method further includes:
receiving, by the network device, capability information of the Ambient-IoT terminal, where the capability information includes the frequency domain information corresponding to the Ambient-IoT terminal; or
receiving from a core network device, by the network device, the capability information of the Ambient-IoT terminal.

In some embodiments, the node device includes a downlink information sending device, and the method further includes:
sending, by the downlink information sending device, indication information to the Ambient-IoT terminal, where the indication information is used for indicating the Ambient-IoT terminal with the frequency domain information satisfying a given condition to perform the communication.

In some embodiments, reference may be made to other optional implementations recited before or after the specification corresponding to FIG. 4d.

The methods provided in the embodiments of the present disclosure provide examples of methods for determining the operating frequency point and the operating bandwidth of the IoT device in order to reduce interference in the network, and increase network capacity or number of connections in the Internet of Things using the backscattering transmission technology. For the convenience of describing the embodiments of the present disclosure, the following examples are listed.

Optionally, the ambient IoT device or device corresponds to the Ambient-IoT terminal of the aforementioned embodiments, hereinafter referred to as the device in the following examples.

### Example 1

The protocol defines the downlink operating frequency point of the device and may define a plurality of operating frequency points. The device may only operate on one or more operating frequency points.

Optionally, the downlink operating frequency point includes the frequency point on which the network sends downlink information to the device, and includes the frequency point on which the CW node sends the CW to the device.

Optionally, considering the low complexity characteristic of the device, the device may have already determined one or more downlink operating frequency points that the device can support during production.

Optionally, the uplink operating frequency point may not be defined separately; and the uplink operating frequency point is related to the CW frequency point, i.e., the downlink operating frequency point. If there is no frequency offset in the backscattering transmission of the device, then the uplink operating frequency point of the device is the same as the downlink operating frequency point of the device. If there is a frequency offset, the uplink operating frequency point is determined based on the downlink operating frequency point and the frequency offset.

### Example 2.

The maximum downlink operating bandwidth requirement of the device is defined by the protocol.

Optionally, the maximum downlink operating bandwidth may be divided into a plurality of different levels, such as Wᵣₘₐₓ₁, Wᵣₘₐₓ₂, Wᵣₘₐₓ₃ .......

Optionally, the device will receive various signals within the downlink operating bandwidth, and when reflecting, the device will reflect various signals received within the downlink receiving bandwidth. Defining the maximum downlink operating bandwidth of the device may limit the downlink receiving bandwidth of the device within a certain range. In this way, the base station can receive and send other information on the spectrum outside the maximum downlink operating bandwidth of the device, such as receiving and sending another parallel independent Ambient-IoT channel, or receiving and sending NR channels.

### Example 3

The minimum downlink operating bandwidth requirement of the device is defined by the protocol.

Optionally, the minimum downlink operating bandwidth may be divided into a plurality of different levels, such as W_{rmin 1}, W_{rmin 2}, W_{rmin 3}.......

Optionally, defining the minimum downlink operating bandwidth can ensure that signals near the downlink operating frequency point can be received, while also providing reference for the network to send downlink signals and the CW node to determine the frequency of CW. That is, in order to ensure that the device can receive the downlink signal and the CW, the frequency of the CW of the downlink signal should be limited within the minimum downlink operating bandwidth of the downlink operating frequency point of the device.

Optionally, for Examples 2 and 3, for different downlink operating frequency points, the maximum downlink operating bandwidth requirement and/or the minimum downlink operating bandwidth requirement corresponding to each frequency point may be defined separately.

Optionally, one possible hardware implementation is that the downlink operating frequency point of the device is the center frequency point of the filter of the device, and the downlink operating bandwidth is the bandwidth of the filter of the device. Filters applied to the ambient IoT may not be able to dynamically adjust the center frequency point, so if the device supports operation on a plurality of downlink operating frequency points, the device needs to correspond to filters of the plurality of downlink operating frequency points.

Optionally, for a specific UE, it may only support operation on one operating frequency point, and the downlink operating bandwidth of the UE is a fixed value that satisfies the protocol requirement.

Optionally, one case where the device supports operation on a plurality of downlink operating frequency points is: the device supports two downlink operating frequency points, where the device receives downlink information on frequency point 1, and receives the CW on frequency point 2. One possible deployment case is that frequency point 1 is on the FDD DL spectrum, and frequency point 2 is on the FDD UL spectrum.

### Example 4

The maximum uplink operating bandwidth requirement of the device is defined by the protocol.

Optionally, the maximum uplink operating bandwidth may be divided into a plurality of different levels, such as Wₜ₁, Wₜ₂, Wₜ₃.......

Optionally, as the uplink sending bandwidth of the device depends on its capability of shifting the frequency spectrum when the device performs reflection on the CW, the uplink sending bandwidth may also be defined as the magnitude of the frequency offset of the reflected wave of the device compared to the CW. For example, the maximum uplink sending bandwidth is defined as offset1, that is, the maximum allowable frequency offset of the frequency of the reflected wave of the device compared to the frequency of the CW is offset1.

Optionally, the frequency offset may also be divided into the single sideband offset and the double sideband offset. Assuming the frequency of the CW is f₁, if it is a single sideband offset, the frequency range of the maximum uplink bandwidth is [f₁, f₁+offset1] or [f₁-offset1, f₁]. If it is a dual sideband offset, the frequency range of the maximum uplink bandwidth is [f₁-offset1, f₁+offset1].

Optionally, defining the maximum uplink operating bandwidth may limit the bandwidth of the uplink sending signal of the device within a certain range. In this way, the base station can also receive and send other information on the spectrum outside the uplink operating bandwidth, such as receiving and sending another parallel independent ambient IoT channel, or receiving and sending NR channels.

Optionally, for different downlink operating frequency points, the maximum uplink operating bandwidth requirement corresponding to the frequency point may be defined separately.

### Example 5

The base station obtains the above operating frequency point information and bandwidth capability information of the device.

Optionally, the base station may obtain the above bandwidth capability information of the device from the core network, or may obtain the above bandwidth capability information from the report of device to the network.

### Example 6

Under specific ambient IoT channel bandwidth configurations, the base station may also only require devices with specific capabilities for communication to ensure that the device communication on that carrier does not interfere with other carriers.

In an example, it is assumed that the base station applies two downlink operating frequency points, operating frequency point 1 and operating frequency point 2. There are devices with downlink operating bandwidths of 5 MHz and 10 MHz on both of the two operating frequency points (assuming that the CW is exactly on the operating frequency point, and the uplink sending bandwidth of device is covered within the downlink operating bandwidth).

In this example, operating frequency point 1 and operating frequency point 2 each have two channel bandwidths, with channel configuration 1 having a bandwidth magnitude of 5 MHz and channel configuration 2 having a bandwidth magnitude of 10 MHz.

When channel configuration 1 is used for operating frequency point 1 and channel configuration 2 is used for operating frequency point 2, the base station, when sending a downlink command on operating frequency point 1 and requesting devices to respond, may indicate only devices with an operating bandwidth <= 5 MHz to respond. When the base station sends a downlink command on operating frequency point 2 and requests devices to respond, the base station may indicate devices with an operating bandwidth greater than 5 MHz and less than or equal to 10 MHz to respond.

When channel configuration 2 is used for operating frequency point 1 and channel configuration 1 is used for operating frequency point 2, the base station, when sending a downlink command on operating frequency point 2 and requesting devices to respond, may indicate only devices with an operating bandwidth <= 5 MHz to respond. When the base station sends a downlink command on operating frequency point 1 and requests devices to respond, the base station may indicate devices with an operating bandwidth greater than 5 MHz and less than or equal to 10 MHz to respond.

As a result, operating frequency points 1 and 2 can support, in a time-division manner, communication of all 5 MHz and 10 MHz devices, while reducing the frequency overhead of the entire ambient IoT system from 20 MHz (10 MHz per operating frequency point) to 15 MHz.

### Example 7

Based on the operating frequency point and the operating bandwidth, devices may be classified as follows.
(1) The device only supports operation on one fixed downlink operating frequency point. The uplink operating bandwidth of the device is also uniquely fixed.
(2) The device only supports operation on one fixed downlink operating frequency point, and the uplink operating bandwidth of the device may have a plurality of different frequency ranges.
(3) The device supports operation on a plurality of downlink operating frequency points, and the uplink operating bandwidth of the device may have a plurality of different frequency ranges.

The embodiments of the present disclosure further provide an apparatus for implementing any one of the above methods. For example, an apparatus is provided. The apparatus includes units or modules for implementing the steps performed by the terminal in any one of the above methods. As another example, another apparatus is provided. The apparatus includes units or modules for implementing the steps performed by the network device (e.g., the access network device, the core network function node, or the core network device, etc.) in any one of the above methods.

It should be understood that the division of units or modules in the above apparatus is only a logical functional division. In actual implementations, the units or modules may be fully or partially integrated into a physical entity, or the units or modules may be physically separated. Furthermore, the units or modules in the apparatus may be implemented in a form of a processor invoking software. For example, the apparatus includes a processor connected to a memory, and instructions are stored in the memory. The processor invokes the instructions stored in the memory to implement any one of the above methods or to implement the functions of the units or modules in the above apparatus. The processor may be, for example, a general-purpose processor, such as a central processing unit (CPU) or a microprocessor, and the memory may be a memory within the apparatus, or a memory outside the apparatus. Alternatively, the units or modules in the apparatus may be implemented in a form of hardware circuit(s). The functions of a part of or all of the units or modules may be implemented through a design of the hardware circuit(s). The hardware circuit(s) described above may be understood as one or more processors. For example, in an implementation, the hardware circuit described above is an application-specific integrated circuit (ASIC), and the functions of a part of or all of the units or modules may be implemented through the design of a logical relationship between components within the circuit. In another implementation, for example, the hardware circuit may be implemented by using a programmable logic device (PLD), such as a field-programmable gate array (FPGA), which may include a large number of logic gate circuits. A connection relationship between the logic gate circuits is configured through a configuration file, thereby achieving the functions of a part of or all of the units or modules described above. All units or modules of the apparatus described above may be implemented entirely through the form of processor invoking software, or may be implemented entirely through the form of hardware circuit(s), or may be implemented partially through the form of processor invoking software, with the remaining part implemented through the form of hardware circuit(s).

In an embodiment of the present disclosure, the processor is a circuit with signal processing capabilities. In an implementation, the processor may be a circuit with instruction read and execution capabilities, such as a central processing unit (CPU), a microprocessor, a graphics processing unit (GPU) (which may be understood as a microprocessor), or a digital signal processor (DSP), etc. In another implementation, the processor may implement certain functions through a logical relationship between hardware circuits. The logical relationship between the hardware circuits described above is fixed or reconfigurable. For example, the processor is a hardware circuit implemented using an application-specific integrated circuit (ASIC) or a programmable logic device (PLD), such as an FPGA. In a reconfigurable hardware circuit, a procedure in which the processor loads a configuration file to realize the configuration of the hardware circuit may be understood as a procedure in which the processor loads instructions to implement the functions of a part of or all of the above units or modules. Furthermore, it may also be a hardware circuit designed for artificial intelligence, which may be understood as an ASIC, such as a neural network processing unit (NPU), a tensor processing unit (TPU), or a deep learning processing unit (DPU), etc.

FIG. 5a is a schematic diagram of a structure of a terminal proposed in an embodiment of the present disclosure. As shown in FIG. 5a, the terminal 5100 may include at least one of the following: a transceiving module 5101 and a processing module 5102. In some embodiments, the transceiving module 5101 is configured to perform, based on corresponding frequency domain information, communication with a node device.

Optionally, the above transceiving module 5101 is configured to perform at least one of the communication steps, such as sending and/or receiving, performed by the terminal 101 in any of the above methods, which will not be repeated here. Optionally, the above processing module 5102 is configured to perform at least one of the other steps performed by the terminal 101 in any of the above methods, which will not be repeated here.

FIG. 5b is a schematic diagram of a structure of a node device proposed in an embodiment of the present disclosure. As shown in FIG. 5b, the node device 5200 may include at least one of the following: a transceiving module 5201, a processing module 5202, etc. In some embodiments, the above transceiving module 5201 is configured to perform, based on frequency domain information corresponding to an Ambient-IoT terminal, communication with the Ambient-IoT terminal.

Optionally, the above transceiving module 5201 is configured to perform at least one of the communication steps, such as sending and/or receiving, performed by the node device in any of the above methods, which will not be repeated here. Optionally, the above processing module 5202 is configured to perform at least one of the other steps performed by the node device in any of the above methods, which will not be repeated here.

In some embodiments, the transceiving module may include a sending module and/or a receiving module, where the sending module and the receiving module may be separate or integrated. Optionally, the transceiving module may be interchangeable with the transceiver.

In some embodiments, the processing module may be a single module or may include a plurality of sub-modules. Optionally, the above plurality of sub-modules respectively performs all of or a part of the steps required to be performed by the processing module. Optionally, the processing module may be interchangeable with the processor.

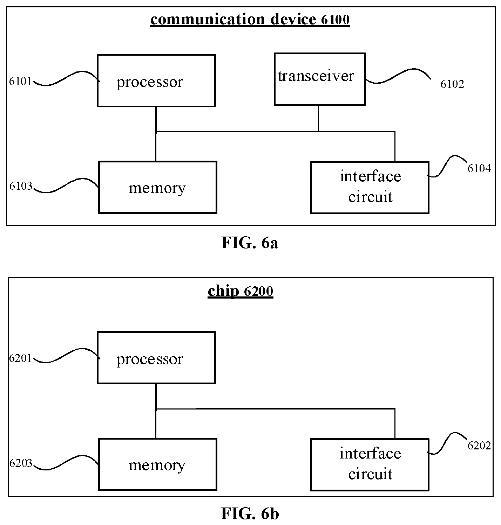

FIG. 6a is a schematic diagram of a structure of a communication device 6100 proposed in an embodiment of the present disclosure. The communication device 6100 may be a node device (e.g., an access network device or a core network device, etc.), or may be a terminal (e.g., user equipment, etc.), or may be a chip, chip system, or processor, etc., that supports the network device in implementing any one of the above methods, or may be a chip, chip system, or processor, etc., that supports the terminal in implementing any one of the above methods. The communication device 6100 may be configured to implement the methods described in the above method embodiments. For specific details, please refer to the descriptions in the above method embodiments.

As shown in FIG.6a, the communication device 6100 includes one or more processors 6101. The processor 6101 may be a general-purpose processor or a dedicated processor, such as a baseband processor or a central processor. The baseband processor may be configured to process communication protocols and communication data, and the central processor may be configured to control a communication device (e.g., a base station, a baseband chip, a terminal device, a terminal device chip, a DU or a CU, etc.), execute programs, and process program data. Optionally, the communication device 6100 may be configured to implement any of the above methods. Optionally, one or more processors 6101 are configured to invoke instructions to cause the communication device 6100 to perform any one of the above methods.

In some embodiments, the communication device 6100 further includes one or more transceivers 6102. When the communication device 6100 includes one or more transceivers 6102, the communication steps such as sending and/or receiving in the above methods are performed by the transceivers 6102, and other steps are performed by the processor 6101. In some optional embodiments, the transceiver may include a receiver and/or a sender. The receiver and the sender may be separate or integrated. Optionally, the terms such as transceiver, transceiving unit, transceiving machine, transceiving circuit, interface circuit, interface, etc., may be interchangeable with each other; terms such as sender, sending unit, sending machine, sending circuit, etc., may be interchangeable with each other; and terms such as receiver, receiving unit, receiving machine, receiving circuit, etc., may be interchangeable with each other.

In some embodiments, the communication device 6100 further includes one or more memories 6103 for storing data. Optionally, all of or a part of the memories 6103 may also be located outside the communication device 6100. In optional embodiments, the communication device 6100 further includes one or more interface circuits 6104. Optionally, the interface circuit 6104 is connected to the memory 6103. The interface circuit 6104 may be configured to receiving data from the memory 6103 or other device(s), and may be configured to send data to the memory 6103 or other device(s). For example, the interface circuit 6104 may read data stored in the memory 6103 and send the data to the processor 6101.

The communication device 6100 described in the above embodiments may be a network device or a terminal, but the scope of the communication device 6100 described in the present disclosure is not limited thereto, and the structure of the communication device 6100 may not be limited by FIG. 6a. The communication device may be a standalone device or a part of a larger device. For example, the communication device may be: (1) a standalone integrated circuit IC, or a chip, or a chip system or a sub-system; (2) a collection of one or more ICs, optionally, the IC collection may also include a storage component for storing data or programs; (3) an ASIC, such as a modem; (4) a module that may be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc.; (6) others, etc.

FIG. 6b is a schematic diagram of a structure of a chip 6200 proposed in an embodiment of the present disclosure. For a case where the communication device 6100 may be a chip or a chip system, reference may be made to the schematic diagram of the structure of the chip 6200 shown in FIG. 6b, but not limited thereto.

The chip 6200 includes one or more processors 6201. The chip 6200 is configured to perform any one of the above methods.

In some embodiments, the chip 6200 further includes one or more interface circuits 6202. Optionally, terms such as interface circuit, interface, transceiving pin, etc. may be interchangeable with each other. In some embodiments, the chip 6200 further includes one or more memories 6203 for storing data. Optionally, all of or a part of the memory 6203 may be located outside the chip 6200. Optionally, the interface circuit 6202 is connected to the memory 6203. The interface circuit 6202 may be configured to receive data from the memory 6203 or other devices, or may be configured to send data to the memory 6203 or other devices. For example, the interface circuit 6202 may read data stored in the memory 6203 and send the data to the processor 6201.

In some embodiments, the interface circuit 6202 performs at least one of the communication steps such as sending and/or receiving in the above methods. The interface circuit 6202 performs the communication steps such as sending and/or receiving in the above methods, for example, referring to that the interface circuit 6202 executes the data interaction between the processor 6201, chip 6200, memory 6203, or transceiving device. In some embodiments, the processor 6201 may perform at least one of the other steps.

The modules and/or devices described in various embodiments such as virtual devices, physical devices, chips, etc. may be combined or separated arbitrarily according to the situation. Optionally, a part of or all of the steps may also be executed collaboratively by a plurality of modules and/or devices, and no limitation is made here.

The embodiments of the present disclosure further provide a storage medium. The storage medium described above stores an instruction. The instruction, when run on the communication device 6100, causes the communication device 6100 to perform any of the above methods. Optionally, the storage medium described above is an electronic storage medium. Optionally, the storage medium described above is, but not limited to, a computer-readable storage medium. The storage medium may also be a storage medium readable by other devices. Optionally, the storage medium described above may be, but not limited to, a non-transitory storage medium. The storage medium described above may also be a transient storage medium.

The present disclosure further provides a program product that, when executed by the communication device 6100, causes the communication device 6100 to perform any of the above methods. Optionally, the program product described above is a computer program product.

The present disclosure further provides a computer program that, when run on a computer, causes the computer to perform any of the above methods.

### INDUSTRIAL APPLICABILITY

The Ambient-IoT terminals can perform communication based on their respective corresponding frequency domain information. In this way, different Ambient-IoT terminals can use the corresponding frequency domain resources for communication, which reduces interference between communication procedures of different Ambient-IoT terminals.

## Claims

1. A communication method, wherein the method comprises:
performing, by an ambient internet of things (Ambient-IoT) terminal based on corresponding frequency domain information, communication with a node device.

2. The method according to claim 1, wherein the node device comprises at least one of:
a downlink information sending device or a network device;
an energy source node; and
an uplink information receiving device.

3. The method according to claim 2, wherein performing, by the Ambient-IoT terminal based on the corresponding frequency domain information, the communication with the node device comprises at least one of:
receiving, by the Ambient-IoT terminal based on the corresponding frequency domain information, downlink information sent from the downlink information sending device, and/or receiving, by the Ambient-IoT terminal based on the corresponding frequency domain information, a downlink signal sent from the energy source node; and
sending, by the Ambient-IoT terminal based on the corresponding frequency domain information, uplink information to an information receiving end device.

4. The method according to any one of claims 1 to 3, wherein the frequency domain information comprises at least one of:
a downlink operating frequency point supported by the Ambient-IoT terminal;
a downlink operating bandwidth supported by the Ambient-IoT terminal; and
an uplink operating bandwidth supported by the Ambient-IoT terminal.

5. The method according to any one of claims 1 to 4, wherein
the frequency domain information corresponding to the Ambient-IoT terminal satisfies a frequency domain requirement defined by a protocol.

6. The method according to claim 5, wherein the frequency domain requirement comprises at least one of:
a plurality of downlink operating frequency points;
a maximum downlink operating bandwidth;
a minimum downlink operating bandwidth; and
a maximum uplink operating bandwidth; wherein
the downlink operating frequency points are center frequency points defined by the protocol for downlink reception of the Ambient-IoT terminal, the maximum downlink operating bandwidth is a maximum value of a frequency width defined by the protocol that allows for downlink operation of the Ambient-IoT terminal, the minimum downlink operating bandwidth is a minimum value of the frequency width defined by the protocol for the downlink operation of the Ambient-IoT terminal, and the maximum uplink operating bandwidth is a maximum value of a frequency width defined by the protocol that allows for uplink operation of the Ambient-IoT terminal.

7. The method according to claim 6, wherein
at least one of the maximum downlink operating bandwidth, the minimum downlink operating bandwidth, and the maximum uplink operating bandwidth is defined in a plurality of levels.

8. The method according to claim 6, wherein
the maximum uplink operating bandwidth is determined based on an operating frequency of an energy source node, and a frequency offset based on the operating frequency.

9. The method according to claim 6, wherein
each one of the plurality of downlink operating frequency points corresponds to at least one of the following frequency domain requirements: the maximum downlink operating bandwidth, the minimum downlink operating bandwidth, and the maximum uplink operating bandwidth.

10. The method according to any one of claims 1 to 9, wherein the node device comprises a network device, and the method further comprises:
sending, from the Ambient-IoT terminal, capability information to the network device, wherein the capability information comprises the frequency domain information corresponding to the Ambient-IoT terminal.

11. The method according to any one of claims 1 to 9, wherein the node device comprises a downlink information sending device, and the method further comprises:
receiving, by the Ambient-IoT terminal, indication information sent from the downlink information sending device, wherein the indication information is used for indicating the Ambient-IoT terminal with the frequency domain information satisfying a given condition to perform the communication.

12. A communication method, wherein the method comprises:
performing, by a node device based on frequency domain information corresponding to an ambient internet of things (Ambient-IoT) terminal, communication with the Ambient-IoT terminal.

13. The method according to claim 12, wherein the node device comprises at least one of:
a downlink information sending device or a network device;
an energy source node; and
an uplink information receiving device.

14. The method according to claim 13, wherein performing, by the node device based on the frequency domain information corresponding to the Ambient-IoT terminal, the communication with the Ambient-IoT terminal comprises at least one of:
sending, by the downlink information sending device based on the frequency domain information corresponding to the Ambient-IoT terminal, downlink information to the Ambient-IoT terminal, and/or sending, by the energy source node based on the frequency domain information corresponding to the Ambient-IoT terminal, a downlink signal to the Ambient-IoT terminal; and
receiving, by the uplink information receiving device based on the frequency domain information corresponding to the Ambient-IoT terminal, uplink information sent from the Ambient-IoT terminal.

15. The method according to any one of claims 12 to 14, wherein the frequency domain information comprises at least one of:
a downlink operating frequency point supported by the Ambient-IoT terminal;
a downlink operating bandwidth supported by the Ambient-IoT terminal; and
an uplink operating bandwidth supported by the Ambient-IoT terminal.

16. The method according to any one of claims 12 to 15, wherein
the frequency domain information corresponding to the Ambient-IoT terminal satisfies a frequency domain requirement defined by a protocol.

17. The method according to claim 16, wherein the frequency domain requirement comprises at least one of:
a plurality of downlink operating frequency points;
a maximum downlink operating bandwidth;
a minimum downlink operating bandwidth; and
a maximum uplink operating bandwidth; wherein
the downlink operating frequency points are center frequency points defined by the protocol for downlink reception of the Ambient-IoT terminal, the maximum downlink operating bandwidth is a maximum value of a frequency width defined by the protocol that allows for downlink operation of the Ambient-IoT terminal, the minimum downlink operating bandwidth is a minimum value of the frequency width defined by the protocol for the downlink operation of the Ambient-IoT terminal, and the maximum uplink operating bandwidth is a maximum value of a frequency width defined by the protocol that allows for uplink operation of the Ambient-IoT terminal.

18. The method according to claim 17, wherein
at least one of the maximum downlink operating bandwidth, the minimum downlink operating bandwidth, and the maximum uplink operating bandwidth is defined in a plurality of levels.

19. The method according to claim 17, wherein
the maximum uplink operating bandwidth is determined based on an operating frequency of an energy source node, and a frequency offset based on the operating frequency.

20. The method according to claim 17, wherein
each one of the plurality of downlink operating frequency points corresponds to at least one of the following frequency domain requirements: the maximum downlink operating bandwidth, the minimum downlink operating bandwidth, and the maximum uplink operating bandwidth.

21. The method according to any one of claims 12 to 20, wherein the node device comprises a network device, and the method further comprises:
receiving, by the network device, capability information of the Ambient-IoT terminal, wherein the capability information comprises the frequency domain information corresponding to the Ambient-IoT terminal; or
receiving from a core network device, by the network device, the capability information of the Ambient-IoT terminal.

22. The method according to any one of claims 12 to 20, wherein the node device comprises a downlink information sending device, and the method further comprises:
sending, by the downlink information sending device, indication information to the Ambient-IoT terminal, wherein the indication information is used for indicating the Ambient-IoT terminal with the frequency domain information satisfying a given condition to perform the communication.

23. An ambient internet of things (Ambient-IoT) terminal, comprising:
a transceiving module, configured to perform, based on corresponding frequency domain information, communication with a node device.

24. A node device, comprising:
a transceiving module, configured to perform, based on frequency domain information corresponding to an ambient internet of things (Ambient-IoT) terminal, communication with the Ambient-IoT terminal.

25. An ambient internet of things (Ambient-IoT) terminal, comprising:
one or more processors; wherein
the terminal is configured to perform the method according to any one of claims 1 to 11.

26. A node device, comprising:
one or more processors; wherein
the device is configured to perform the method according to any one of claims 12 to 22.

27. A communication system, comprising an ambient internet of things (Ambient-IoT) terminal and a node device, wherein the Ambient-IoT terminal is configured to implement the method according to any one of claims 1 to 11, and the node device is configured to implement the method according to any one of claims 12 to 22.

28. A storage medium, wherein the storage medium stores an instruction, and the instruction, when run on a communication device, causes the communication device to perform the method according to any one of claims 1 to 11 or claims 12 to 22.
